# FASCICULE DE BREVET EUROPEEN

(11) **EP 0 678 610 B1**
(45) Date de publication et mention de la délivrance du brevet: **30.06.1999**
(21) Numéro de dépôt: 95400730.8
(22) Date de dépôt: 03.04.1995
(51) Int. Cl.: D04H 18/00, D04H 3/10

(54) **Procédé et machine pour la réalisation d'une armature en forme de plaque pour une pièce de matière composite**
Verfahren und Vorrichtung zur Herstellung einer Verstärkungsplatte für einen Teil Verbundmaterial
Process and machine for the production of an armature plate for a piece of composite material

(30) Priorité: 18.04.1994 FR 9404582
(43) Date de publication de la demande: 25.10.1995
(73) Titulaire: AEROSPATIALE Société Nationale Industrielle, 75781 Paris Cédex 16 (FR)
(72) Inventeur: Cahuzac, Georges, F-33110 Le Bouscat (FR)
(74) Mandataire: Bonnetat, Christian

(56) Documents cités:
- EP-A- 0 284 497
- EP-A- 0 547 738
- DE-A- 3 712 013
- GB-A- 2 159 460
- US-A- 3 425 884

## Description

La présente invention concerne un procédé pour la réalisation d'une armature en forme de plaque pour une pièce de matière composite, formée de ladite armature noyée dans une matrice durcie, ladite armature comprenant des nappes superposées de fil (en carbone, verre, bore, notamment), et une machine pour la mise en oeuvre dudit procédé, ainsi qu'une armature et une pièce de matière composite ainsi obtenues.

Plus particulièrement, quoique non exclusivement, de telles pièces de matière composite sont utilisées dans les domaines aéronautique et spatial en vertu de leurs excellentes propriétés de résistance aux contraintes mécaniques et/ou thermiques.

On connaît de nombreux procédés pour obtenir lesdites pièces de matière composite, et notamment leur armature. De façon générale, on commence par réaliser l'armature à partir de fibres (fils), en particulier minérales, distribuées suivant au moins deux directions, après quoi on introduit la matière de la matrice dans l'armature, et on durcit ladite matière pour former ladite matrice et, ainsi, ladite pièce composite.

Par exemple, le brevet EP-B-0 284 497 de la demanderesse décrit un procédé pour la réalisation d'une armature pour une pièce de matière composite, formée de ladite armature noyée dans une matrice durcie, ladite armature comprenant des nappes superposées de fil, procédé selon lequel :
- on réalise au moins certaines desdites nappes en déposant des tronçons de fil rectilignes faisant partie d'un fil continu sur un support, en tendant chaque tronçon de fil entre deux points de fixation en position des extrémités dudit tronçon, la nappe étant ainsi constituée de tronçons de fil s'étendant au moins sensiblement parallèlement les uns par rapport aux autres, et les tronçons de fil de ladite nappe s'étendant suivant une direction, soit parallèle, soit croisée par rapport à la direction des tronçons de fils d'une autre nappe quelconque de l'armature ; et
- on solidarise entre elles l'ensemble des nappes superposées par piquage sans nouage d'un fil continu traversant lesdites nappes.

Dans ce cas, pour déposer les tronçons de fil rectilignes constituant les nappes correspondantes, on utilise un dispositif particulier comportant un tube, ouvert à son extrémité inférieure et présentant une ouverture à sa partie supérieure, pour le passage d'un fil continu. Cette tête de dépose permet de tendre chaque tronçon de fil entre des points de fixation en position de ses extrémités, matérialisés par des épingles implantées provisoirement dans le support, réalisé en une matière pouvant être pénétrée par lesdites épingles, comme une mousse de matière synthétique. Après formation des nappes superposées de fil et solidarisation desdites nappes entre elles, les épingles sont retirées du support.

Toutefois, dans le brevet EP-B-0 284 497, il s'agit de réaliser des armatures au moins sensiblement cylindriques et, pour ce faire, le support se présente sous la forme d'un mandrin également cylindrique. Ainsi, chaque nappe constituée de tronçons de fil rectilignes est déjà compactée par la nappe sus-jacente constituée d'une longueur de fil continu bobinée autour dudit mandrin, laquelle nappe sus-jacente permet également, le cas échéant, de compacter et tasser l'ensemble des nappes sous-jacentes déjà déposées sur le mandrin. La solidarisation entre elles des nappes superposées, par piquage sans nouage d'un fil continu traversant lesdites nappes, peut donc s'effectuer comme illustré par les figures 10 à 10f du brevet EP-B-0 284 497, par simple introduction du fil à travers les nappes, à l'aide d'une aiguille, le fil y étant retenu sous forme de boucles du fait même que les nappes qu'il traverse sont déjà, par construction, compactées. Le fil de solidarisation renforce l'effet de tassement et de compactage, obtenu préalablement lors de la dépose des nappes constituées de longueurs de fil circonférentielles, et assure le maintien ensemble de toutes les nappes et la tenue mécanique de l'armature.

Cependant, lorsque l'on souhaite réaliser des armatures en forme de plaques (planes ou courbes), à partir de nappes superposées constituées, chacune, de tronçons de fil rectilignes, le problème de la solidarisation entre elles des nappes superposées se pose de manière différente.

En effet, dans ce cas, si l'on fait abstraction d'un entrecroisement éventuel des nappes successives, ce qui n'est pas non plus souhaitable pour d'autres raisons, les nappes superposées ne présentent, par construction, aucun compactage. Une solution pour résoudre ce problème est évoquée dans le brevet EP-0 056 351. Ici, l'armature est constituée de nappes dites "de fils de chaîne" et de nappes dites "de fils de trame", superposées dans des plans parallèles, les fils des nappes n'étant pas entrecroisés entre eux, et la nappe supérieure et la nappe inférieure de l'ensemble des nappes étant constituées de nappes "de trame". La solidarisation desdites nappes "de chaîne" et "de trame" est obtenue par des fils de liage qui traversent ces dernières, en contournant les fils de trame des nappes externes (supérieure et inférieure) de manière à former avec ceux-ci un tissu usuel emprisonnant les nappes de chaîne et de trame internes.

On s'aperçoit ainsi que, dans ce cas, le tassement des nappes de chaîne et de trame est uniquement obtenu par traction sur les fils de liage. En effet, tels qu'ils sont disposés, les fils de liage nécessitent, à l'évidence, une navette pour leur dépose, ce qui implique que les nappes présentent une faible "densité" des fils de chaîne et de trame (ou un écartement important de ces fils), ainsi qu'une faible épaisseur, ce qui, en conséquence, nécessite d'exercer une traction sur les fils de liage pour maintenir et tasser les fils de chaîne et de trame. Une telle traction risque bien entendu de casser les fils de liage fragiles par nature. Par ailleurs, la solution indiquée ci-dessus revient, en définitive, à réaliser, au moins en partie, un tissu usuel en entrecroisant les fils de trame des nappes externes et les fils de liage, en fait équivalents à des fils de chaîne.

La présente invention a pour but d'éviter ces inconvénients, et concerne un procédé pour la réalisation d'une armature en forme de plaque pour une pièce de matière composite, grâce auquel la tenue mécanique de l'armature est assurée sans qu'il soit nécessaire, pour cela, de réaliser une sorte de "tissu" de fils de trame et de fils de liage entrecroisés.

A cet effet, le procédé pour la réalisation d'une armature en forme de plaque pour une pièce de matière composite, formée de ladite armature noyée dans une matrice durcie, ladite armature comprenant des nappes superposées de fil, procédé selon lequel :
- on réalise lesdites nappes superposées en disposant, pour chaque nappe, des tronçons de fil rectilignes au moins sensiblement parallèlement les uns par rapport aux autres, les tronçons de fil rectilignes de chaque nappe s'étendant suivant une direction, soit parallèle, soit croisée par rapport à la direction des tronçons de fil rectilignes d'une autre nappe quelconque de l'armature ; et
- on solidarise entre elles l'ensemble des nappes superposées à l'aide d'un fil traversant lesdites nappes, ledit fil de solidarisation passant et repassant à travers lesdites nappes pour couvrir au moins la majeure partie de la surface desdites nappes,
est remarquable, selon l'invention, en ce que :
- on dépose lesdites nappes superposées sur un support ;
- on tasse par pression mécanique lesdites nappes superposées ; et
- pour conserver l'état de tassement ainsi obtenu desdites nappes, on pique sans nouage le fil de solidarisation des nappes à travers lesdites nappes jusqu'au moins le niveau de la surface dudit support, en formant des points de piqûre sur au moins la majeure partie de la surface desdites nappes présentant, après tassement, une densité des tronçons de fil qui les constituent suffisante pour retenir par friction ledit fil de solidarisation.

Ainsi, la tenue mécanique de l'armature est uniquement obtenue par la friction du fil de solidarisation sur les tronçons de fil constituant les nappes superposées, sans appliquer de contrainte sur ledit fil de solidarisation, et cela grâce au tassement préalablement effectué des nappes superposées pour atteindre une densité suffisante des tronçons de fil qui les constituent.

La densité des tronçons de fil constituant lesdites nappes superposées est telle que lesdits tronçons de fil occupent au moins 40% du volume de la pièce de matière composite, le restant étant occupé par le fil de solidarisation et la matrice.

De préférence, lesdits tronçons de fil occupent entre 40 et 60% du volume de la pièce de matière composite. Le fil de solidarisation occupe de 1 à 10% du volume de la pièce de matière composite.

Par ailleurs, chacun desdits tronçons de fil rectilignes est tendu entre deux points de fixation en position des extrémités dudit tronçon.

En particulier, chaque point de fixation en position peut être matérialisé par un picot, implanté dans la zone marginale dudit support, autour duquel picot passe la jonction entre deux tronçons de fil rectilignes de même direction et de sens opposés. Cela permet la dépose aisée de tronçons de fil rectilignes dans deux directions orthogonales.

Selon une autre caractéristique de l'invention, ledit support est constitué d'un cadre quadrangulaire, entourant une masse de matière souple, telle qu'une mousse de matière synthétique, et lesdits picots d'accrochage sont implantés sur le pourtour dudit cadre.

Dans ce cas, lesdits picots d'accrochage peuvent être implantés sur le pourtour dudit cadre, en étant régulièrement répartis selon un motif de ligne brisée sur chaque face du cadre. Cela permet de déposer aisément des tronçons de fil rectilignes selon une direction inclinée, par exemple à 45°, par rapport aux deux directions orthogonales précitées.

Par ailleurs, des picots de guidage peuvent être implantés intérieurement aux picots d'accrochage, en formant plusieurs rangées de picots agencés en quinconce sur chaque face du cadre.

Pour éviter un risque d'échappement des tronçons de fil, lesdits picots d'accrochage sont avantageusement implantés en étant inclinés vers l'extérieur du cadre.

De plus, pour obtenir des renforcements de forme arbitraire de l'armature, des picots de guidage et d'accrochage supplémentaires peuvent être implantés dans la masse de matière souple entourée par le cadre.

La présente invention concerne également une machine pour la mise en oeuvre du procédé qui vient d'être décrit, comportant un bâti pourvu d'un piétement et de montants pour le montage d'une barre transversale sur laquelle est monté un chariot, déplaçable suivant une première direction X, muni d'un premier bras s'étendant suivant une deuxième direction Y orthogonale à la direction X et portant un second bras pouvant coulisser transversalement par rapport au plan défini par ladite barre et ledit premier bras suivant une troisième direction Z, des moyens moteurs pour entraîner ledit chariot et lesdits premier et second bras, et des outils de dépose et piquage de fil susceptibles d'être montés, de façon amovible, sur un support à une extrémité dudit second bras, machine qui est remarquable, selon l'invention, en ce que l'outil de dépose de fil présente un tube rigide prolongé par un tube souple, le fil traversant lesdits tubes.

Avantageusement, ledit outil de piquage présente un support rotatif à l'extrémité inférieure duquel est montée une aiguille, associée à un pied-de-biche.

Soit ladite aiguille est creuse et ledit support est traversé par un canal de guidage de fil raccordé à ladite aiguille, soit ladite aiguille présente un chas traversant oblique et est associée à un guide-fil comportant un corps traversé obliquement par un canal de passage de fil, dont l'extrémité inférieure est évasée.

De préférence, l'outil de piquage comporte un mécanisme d'actionnement de l'ensemble pied-de-biche, guide-fil et aiguille, constitué d'un premier vérin actionnant une platine sur laquelle est monté ledit ensemble, un axe portant le guide-fil, et un second vérin actionnant le pied-de-biche.

Avantageusement, ladite aiguille est maintenue sur ladite platine, par l'intermédiaire d'un support, à l'aide d'une pince conique serrée par un écrou.

Par ailleurs, l'axe portant le guide-fil est sollicité par un ressort de traction et retenu par une butée.

Les figures du dessin annexé feront bien comprendre comment l'invention peut être réalisée. Sur ces figures, des références identiques désignent des éléments semblables.

Les figures 1 à 3 illustrent trois étapes d'un exemple de procédé selon l'invention pour la réalisation d'une armature pour une pièce de matière composite sur un support à surface supérieure plane.

La figure 4 illustre schématiquement un exemple de motif d'implantation des picots d'accrochage sur le support.

La figure 5 est la section selon la ligne V-V de la figure 4.

La figure 6 montre une possibilité de dépose de tronçons de fil rectilignes grâce au motif d'implantation des picots de la figure 4.

La figure 7 illustre l'implantation de picots de guidage supplémentaires sur le support.

La figure 8 est une section selon la ligne VIII-VIII de la figure 7.

La figure 9 montre schématiquement en perspective un exemple de machine pour la réalisation de l'armature des figures 1 à 3.

La figure 10 est une vue schématique en perspective d'un dispositif de piquage pour la machine de la figure 9.

La figure 11 est une vue schématique en coupe illustrant un montage selon l'invention d'une aiguille de piquage.

Les figures 12 et 13 sont des vues en coupe longitudinale de deux variantes de réalisation de l'aiguille utilisée dans le procédé de l'invention.

La figure 14 montre, en coupe, un guide-fil pour l'aiguille de la figure 13.

La figure 15 illustre schématiquement une tête de piquage munie d'une aiguille et d'un guide-fil selon la figure 14.

La figure 16 est une vue schématique d'un outil de dépose de tronçons de fil notamment rectilignes selon l'invention.

La figure 17 est une vue schématique de face d'un second exemple de machine pour la réalisation de l'armature des figures 1 à 3.

La figure 18 est une coupe selon la ligne XVIII-XVIII de la figure 17.

Les figures 19A à 19D illustrent schématiquement le processus de solidarisation des nappes superposées de l'armature réalisée conformément à l'invention.

La figure 20 illustre la superposition et la solidarisation de plusieurs armatures réalisées conformément à l'invention.

Les figures 21 à 23 montrent schématiquement en perspective différents exemples de pièces de matière composite comportant une armature réalisée conformément à l'invention.

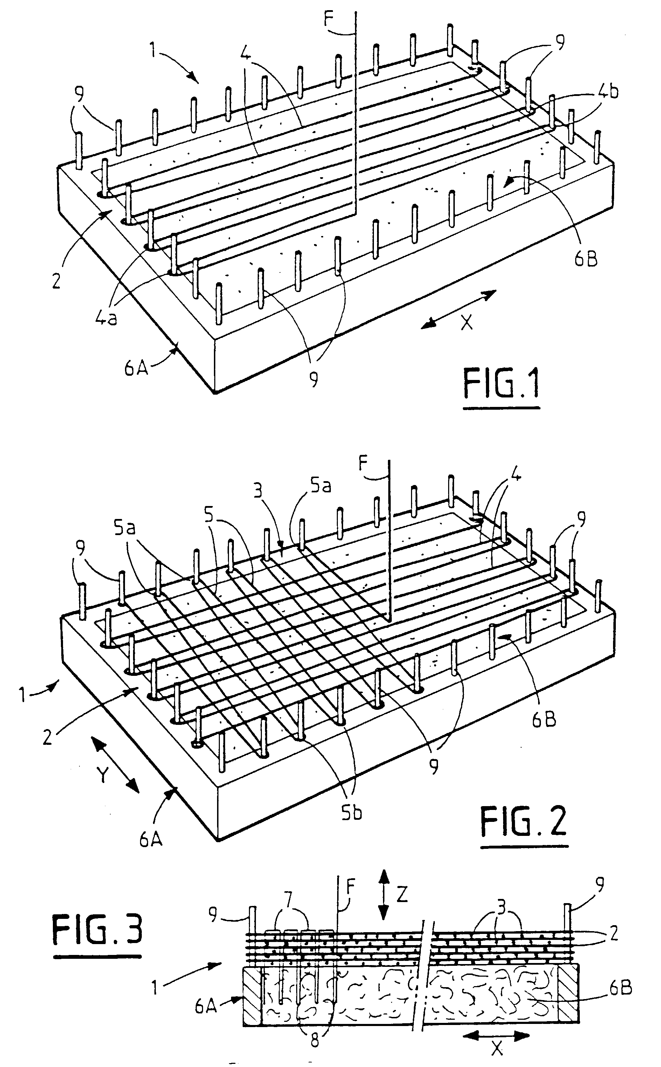

Sur les figures 1 à 3, on a représenté trois étapes de fabrication d'un exemple de réalisation d'une armature 1 selon l'invention, comportant des premières et secondes nappes superposées 2,3 de fil continu F.

Plus particulièrement, chaque nappe 2,3 est réalisée en déposant des tronçons de fil rectilignes 4,5 faisant partie d'un fil continu F sur un support constitué d'un cadre quadrangulaire 6A, entourant une masse 6B de matière susceptible d'être pénétrée par des aiguilles (ou des picots), comme on le verra plus en détail par la suite. Une matière appropriée pour cela est une mousse de matière synthétique, notamment une mousse de polyuréthane. De même, la matière du cadre 6A doit permettre l'implantation de picots. L'armature 1 à réaliser devant présenter une forme de plaque plane, ou éventuellement courbe, la surface supérieure du support, notamment de la mousse 6B, présentera une géométrie correspondante, et sera notamment plane, comme représentée sur les figures 1 à 3.

Comme montré sur les figures 1 à 3, chaque nappe 2,3 est constituée de tronçons de fil 4,5 s'étendant parallèlement les uns par rapport aux autres. Le défaut de parallélisme, visible sur les figures 1 et 2, est dû au fait que, pour des raisons de clarté du dessin, les tronçons de fil sont plus écartés que dans la réalité. De plus, les tronçons de fil 4 des premières nappes 2 s'étendent suivant une première direction X, tandis que les tronçons de fil 5 des secondes nappes 3 s'étendent suivant une deuxième direction Y, croisée par rapport à la première direction X et notamment orthogonale par rapport à celle-ci, comme montré. L'armature 1, dans l'exemple de réalisation des figures 1 à 3, comprend donc une succession alternée de premières nappes 2 et de secondes nappes 3, dont les tronçons de fil rectilignes 4,5 s'étendant suivant deux directions croisées. En d'autres termes, l'armature 1 est une structure feuilletée, dont deux "feuilles" successives quelconques présentent des segments de fil (ou fibre) s'étendant suivant deux directions croisées. Chaque feuille de la structure comporte une ou, éventuellement, plusieurs "couches" de fil, constitué, comme déjà indiqué, de carbone, verre, bore, notamment.

En outre, pour sa dépose, chaque tronçon de fil 4,5 est tendu entre deux points de fixation en position des extrémités dudit tronçon, chaque point de fixation en position étant matérialisé par un picot 9 (petite tige rigide, métallique ou autre) implanté sur le pourtour du cadre 6, et autour duquel passe la jonction 4a,4b ; 5a,5b entre deux tronçons de fil rectilignes 4,5 de même direction X ou Y et de sens opposés (le terme "sens" se rapportant dans ce cas au sens de dépose, ou "avance", du fil).

Après formation de l'ensemble des nappes superposées 2,3, celles-ci sont solidarisées entre elles par piquage sans nouage, suivant la direction Z, d'un fil continu F traversant lesdites nappes, et formant des points de piqûre 7 à boucles ouvertes 8, ces dernières s'étendant dans le support en mousse 6B. La direction Z est transversale au plan défini par les directions X et Y, en étant éventuellement inclinée par rapport à ce plan. Cependant, généralement, la direction Z sera orthogonale au plan X,Y.

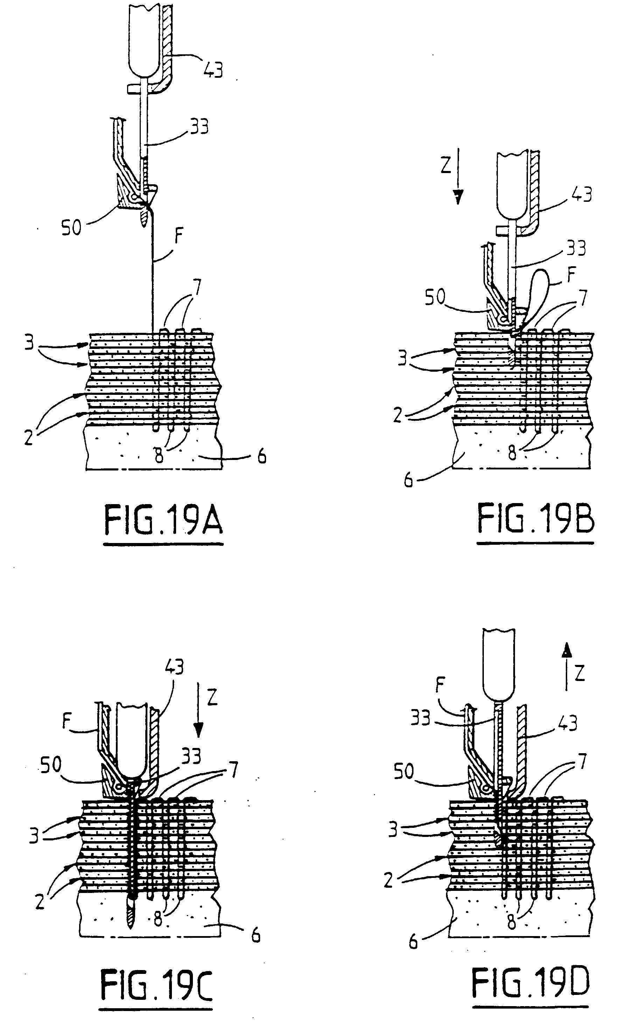

Comme cela sera décrit plus en détail en regard des figures 19A à 19D, cette dernière opération comprend un tassement par pression mécanique des nappes superposées 2,3 et, pour conserver l'état de tassement ainsi obtenu desdites nappes, le fil de solidarisation F des nappes est piqué sous nouage à travers les nappes en formant des points de piqûre 7 sur au moins la majeure partie de la surface desdites nappes 2,3 présentant, après tassement, une densité des tronçons de fil 4,5 qui les constituent suffisante pour retenir par friction le fil de solidarisation F.

En particulier, la densité des tronçons de fil 4,5 constituant les nappes superposées 2,3 est telle que lesdits tronçons de fil 4,5 occupent au moins 40%, de préférence entre 40 et 60%, du volume de la pièce de matière composite, le restant étant occupé par le fil de solidarisation, pour 1 à 10% du volume total, et la matrice (en supposant que la matrice durcie occupe tous les vides de l'armature).

Comme montré sur les figures 1 à 3, les picots d'accrochage 9 peuvent être simplement régulièrement répartis de façon linéaire sur chaque face du cadre 6A, autorisant ainsi la dépose des tronçons de fil rectiligne 4,5 selon deux directions X et Y orthogonales. Toutefois, d'autres agencements des picots peuvent être prévus.

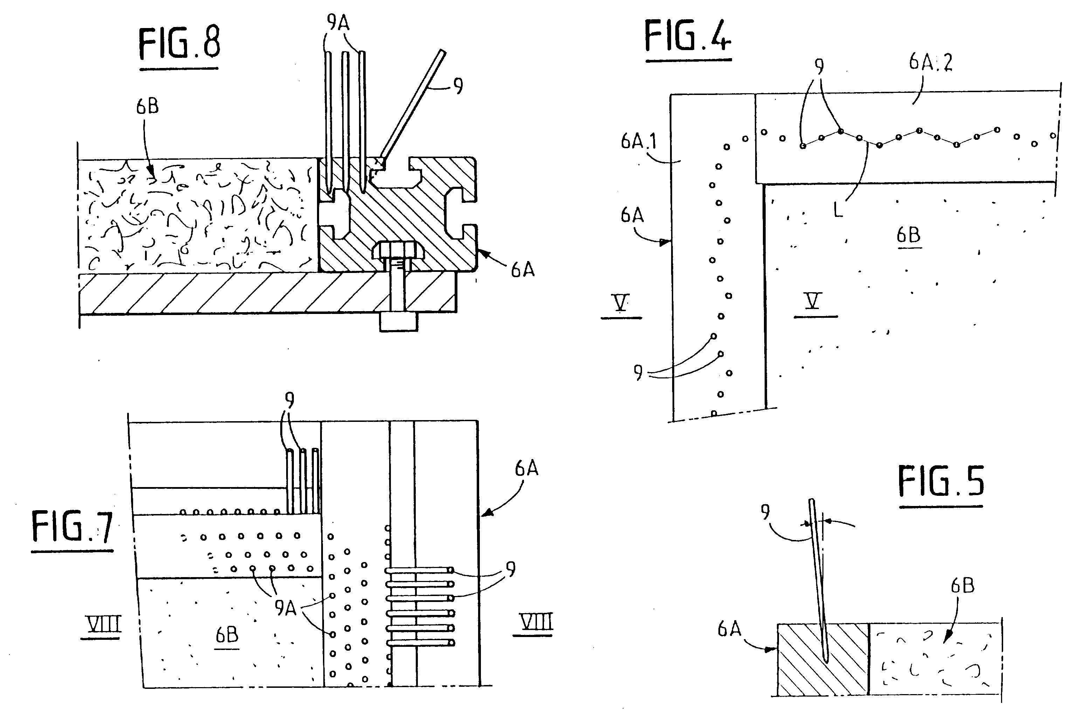

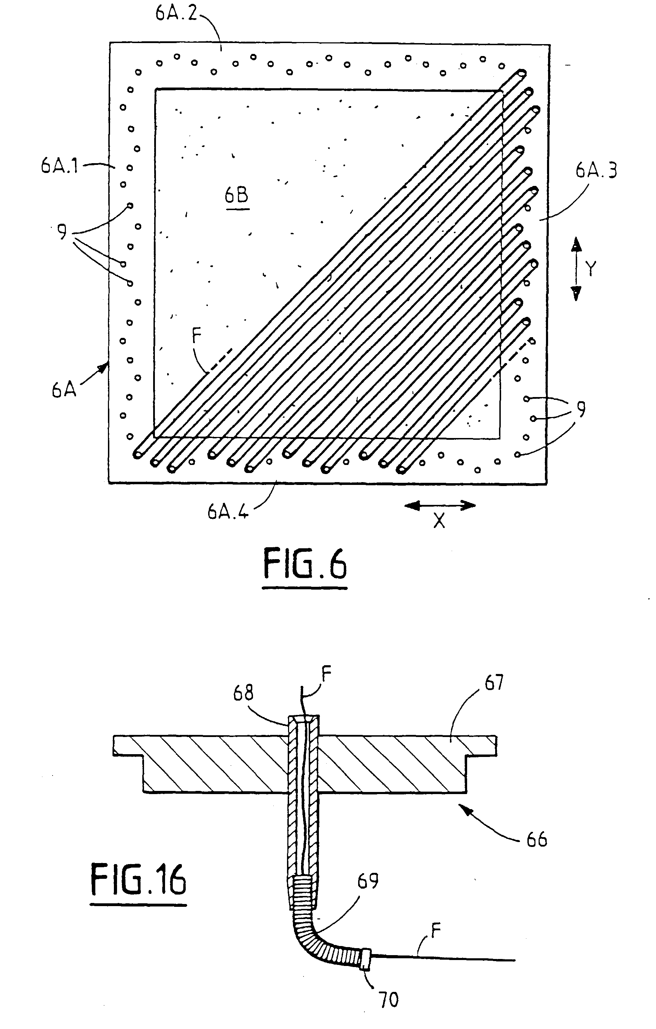

Ainsi, sur les figures 4 à 6, les picots d'accrochage 9 sont implantés sur le pourtour du cadre 6A, en étant régulièrement répartis selon un motif de ligne brisée L sur chaque face 6A.1-6A.4 du cadre. Pour éviter un décrochage éventuel des fils des nappes supérieures, les picots 9 sont légèrement inclinés (de l'ordre de quelques degrés par rapport à la verticale), vers l'extérieur du cadre 6A. Par ailleurs, cet agencement particulier des picots 9 permet notamment la dépose d'une nappe de fil F diagonalement par rapport aux directions X et Y (figure 6), tout en obtenant un pas (écartement entre deux tronçons de fil parallèles) sensiblement égal à celui obtenu pour des nappes "orientées" suivant X ou Y. Pour cela, comme le montre encore la figure 6, trois picots sur quatre doivent être, à chaque fois, pris en compte, pour une orientation des tronçons de fil à 45°, par exemple, par rapport aux directions X et Y. Il est évident qu'une orientation à 135° est également possible.

Il est aussi possible d'implanter des picots de guidage 9A intérieurement aux picots d'accrochage 9, c'est-à-dire, sur le cadre, entre ces derniers et la masse de matière souple 6B, en formant plusieurs rangées de picots agencés en quinconce sur chaque face du cadre 6A, comme le montrent les figures 7 et 8. Dans ce cas, les trois (par exemple) rangées de picots de guidage sont constituées de picots verticaux, tandis que la rangée de picots d'accrochage 9 linéairement répartis est constituée de picots, éventuellement de plus grand diamètre, inclinés vers l'extérieur du cadre 6A afin de permettre la descente et le maintien des fils déposés.

En outre, des picots de guidage et d'accrochage supplémentaires (non représentés) peuvent être implantés, au choix, dans la masse de matière souple 6B, afin d'obtenir des motifs ou des renforcements particuliers de l'armature.

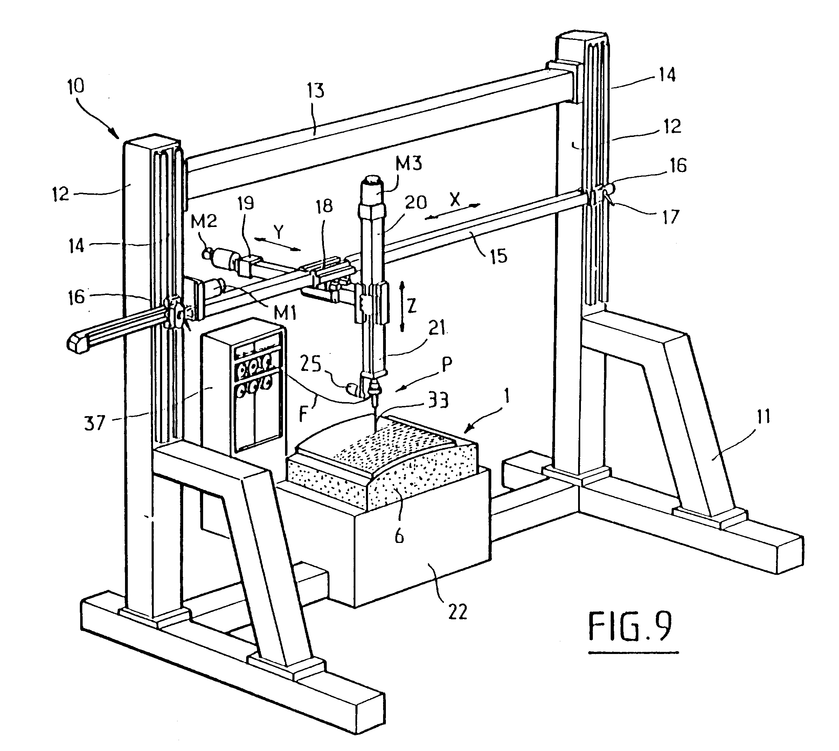

Pour réaliser, notamment, l'armature 1 montrée par les figures 1 à 3, on peut mettre en oeuvre la machine 10 ne nécessitant pas le nouage du fil F, illustrée schématiquement sur la figure 9 et décrite dans le brevet EP-B-0 284 497.

Cette machine 10 comporte un bâti pourvu d'un piétement 11 et de montants verticaux 12, réunis à leur partie supérieure par une traverse horizontale 13.

Chaque montant vertical 12 comporte une glissière 14, et une barre transversale 15 est fixée au voisinage de ses extrémités dans des coulisseaux 16 montés dans les glissières 14 dans lesquelles ils peuvent être immobilisés par des vis 17.

Grâce à cet agencement, la barre 15 peut être réglée en hauteur sur les montants 12.

Sur la barre 15, est monté un chariot 18 sur lequel est prévu un bras horizontal 19 coulissant transversalement et de façon réglable par rapport à la barre 15.

A l'une de ses extrémités, le bras horizontal 19 porte un bras vertical 20 également monté coulissant et de façon réglable.

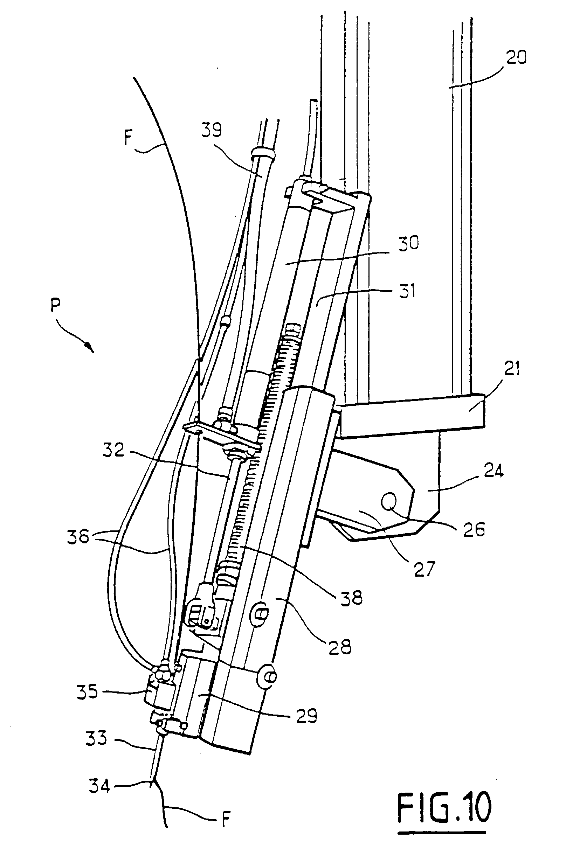

A son extrémité inférieure 21, le bras vertical 20 comporte des moyens de fixation adaptés pour recevoir un dispositif de dépose et de piquage P, plus clairement visible sur la figure 10.

La machine comprend de plus un socle 22, supportant un support 6 pour l'armature 1, présentant une forme de plaque convexe.

On notera que, sur la figure 9, les nappes 2 et 3 ont déjà été déposées et que le dispositif de piquage P est en train d'effectuer la solidarisation des nappes superposées.

On comprend que, grâce à l'agencement de la barre 15 et des bras 19 et 20, l'extrémité 21 peut être réglée dans toute position désirée par rapport au support 6, suivant trois axes orthogonaux X, Y et Z au moyen de moteurs M1, M2 et M3 qui sont représentés, à titre d'exemple, montés sur la barre 15 et aux extrémités des bras 19 et 20 et entraînent ceux-ci suivant ces trois axes par l'intermédiaire de systèmes connus appropriés à pignon et crémaillère, vis sans fin ou autres.

Comme le montre la figure 10, l'extrémité inférieure 21 du bras 20 comporte une patte 24 fixée dans son prolongement et sur laquelle est fixé un moteur électrique 25, par exemple un moteur pas à pas, dont l'arbre 26 horizontal s'étend à travers la patte 24.

On remarquera que le dispositif de piquage P peut être orienté dans un plan vertical, grâce à l'action du moteur 25.

Le dispositif de piquage P, monté sur l'extrémité inférieure 21 du bras vertical 20, comprend un support 27, fixé sur l'arbre 26, sur lequel est fixé un rail 28, un bloc 29 coulissant dans le rail 28, un vérin pneumatique 30 dont le cylindre est fixé sur un prolongement 31 du rail 28, solidaire de ce dernier et dont la tige de piston 32 est reliée au bloc 29.

Le bloc 29 porte une aiguille 33, décrite en détail par la suite.

L'extrémité de l'aiguille, opposée à sa pointe 34, est fixée à côté d'un pince-fil pneumatique de type connu 35 monté sur le bloc 29.

Le pince-fil 35 est relié par des conduits 36 à une source d'air comprimé (non représentée) et le fil F, provenant d'une source 37, alimente ladite aiguille 33.

Un ressort de rappel 38 est prévu entre le bloc 29 et le rail 28, de sorte que, lorsque le vérin 30, alimenté par un tuyau 39, a poussé le bloc 29 en extension et est ensuite mis à l'échappement, le ressort 38 ramène le bloc 29 et l'aiguille en arrière.

On notera que, grâce au moteur M3 et/ou au vérin 30, on peut régler la profondeur de la pénétration de l'aiguille 33.

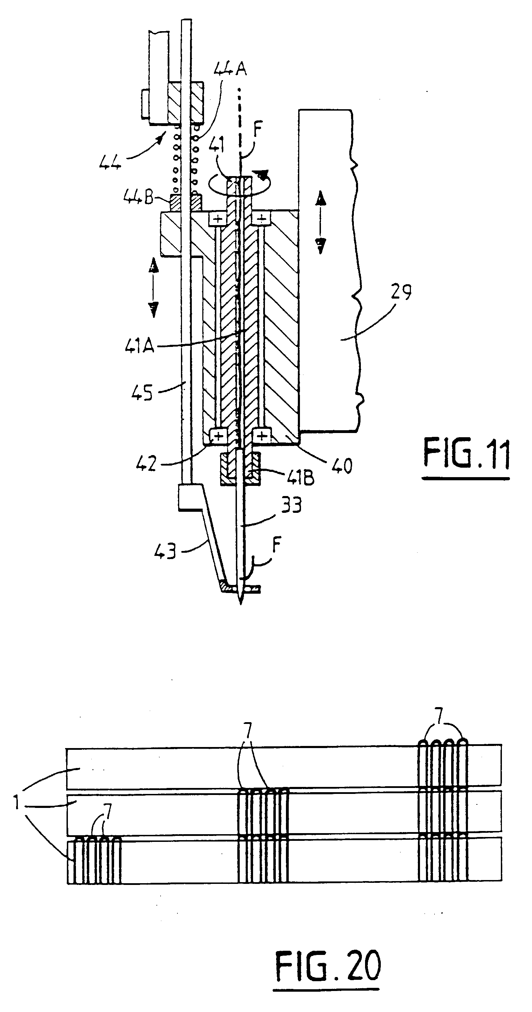

Par ailleurs, pour permettre le mouvement en va-et-vient de l'aiguille 33 par rapport au support 6 (pour déposer les tronçons successifs de fil d'une nappe), il est prévu, comme on le voit sur la figure 11, un support 40, monté sur le bloc 29, dans lequel est agencé un guide 41, pouvant tourner sur des roulements 42 grâce à des moyens d'entraînement non représentés, guide qui est traversé par un canal longitudinal 41A pour le passage du fil F et dont l'extrémité inférieure 41B porte l'aiguille 33. De plus, comme encore montré sur cette figure 11, un pied-de-biche 43 est associé à l'aiguille 33, lequel peut être animé d'un mouvement parallèle à l'extension longitudinale de l'aiguille à l'aide d'un mécanisme à ressort 44. Plus particulièrement, le mécanisme à ressort 44, commandant le pied-de-biche 43, comprend une barre de liaison 45, poussée vers le bas par un ressort de compression 44A et retenue par une butée 44B au contact du support 40 de l'aiguille 33, lorsque l'aiguille est en dehors des nappes déposées. Lorsque l'aiguille 33 descend, le pied-de-biche 43 est retenu par les nappes et le ressort 44A exerce un effort de compression sur celles-ci.

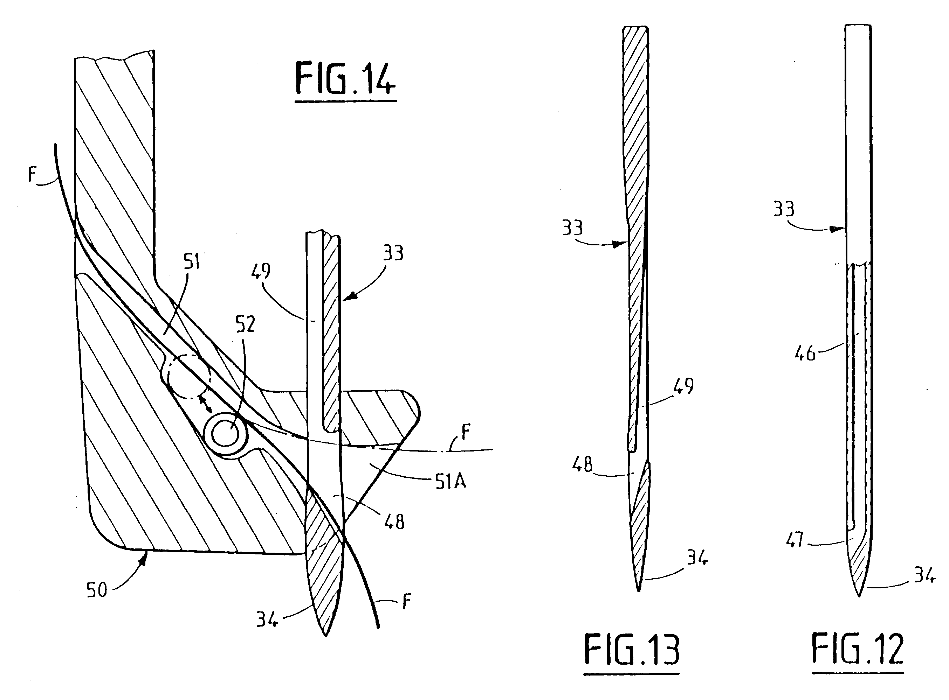

Comme illustré sur la figure 12, l'aiguille 33 peut être une aiguille creuse, traversée par un canal axial 46, pour le passage du fil, et comportant un chas non traversant 47, dans lequel débouche latéralement et obliquement le canal 46.

Toutefois, l'aiguille 33 peut être, avantageusement, comme représentée sur la figure 13, c'est-à-dire qu'elle comporte un chas traversant oblique 48 débouchant dans une gorge longitudinale 49 de section en arc de cercle, dont la profondeur diminue progressivement en s'éloignant de la pointe 34 de l'aiguille et dans laquelle le fil est destiné à passer.

Quand on utilise cette dernière aiguille, un guide-fil particulier peut être prévu, comme montré sur la figure 14. Le guide-fil présente un corps 50, sensiblement en forme de L, traversé obliquement par un canal 51 pour le passage du fil F, dont l'extrémité inférieure 51A est évasée pour permettre de guider le fil, soit de façon sensiblement verticale, soit de façon sensiblement horizontale (fil F représenté en traits mixtes), comme on le verra plus en détail par la suite. Un galet 52 libère le fil F en avançant dans le canal 51, et le coince en reculant dans ledit canal. En effet, c'est le glissement du fil qui, en tirant vers le bas, fait rouler le galet 52 en ouvrant le canal 51, alors qu'un mouvement en arrière ("remontée" du fil) bloque à nouveau le fil.

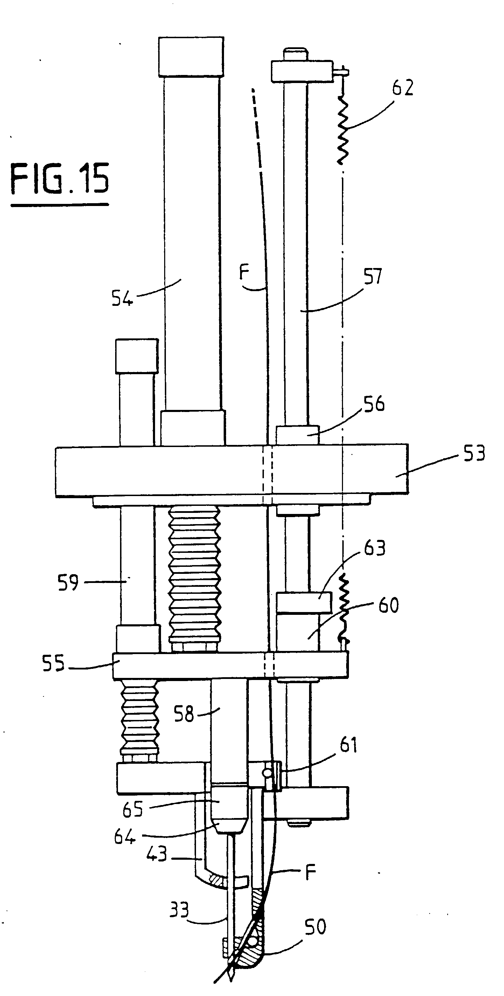

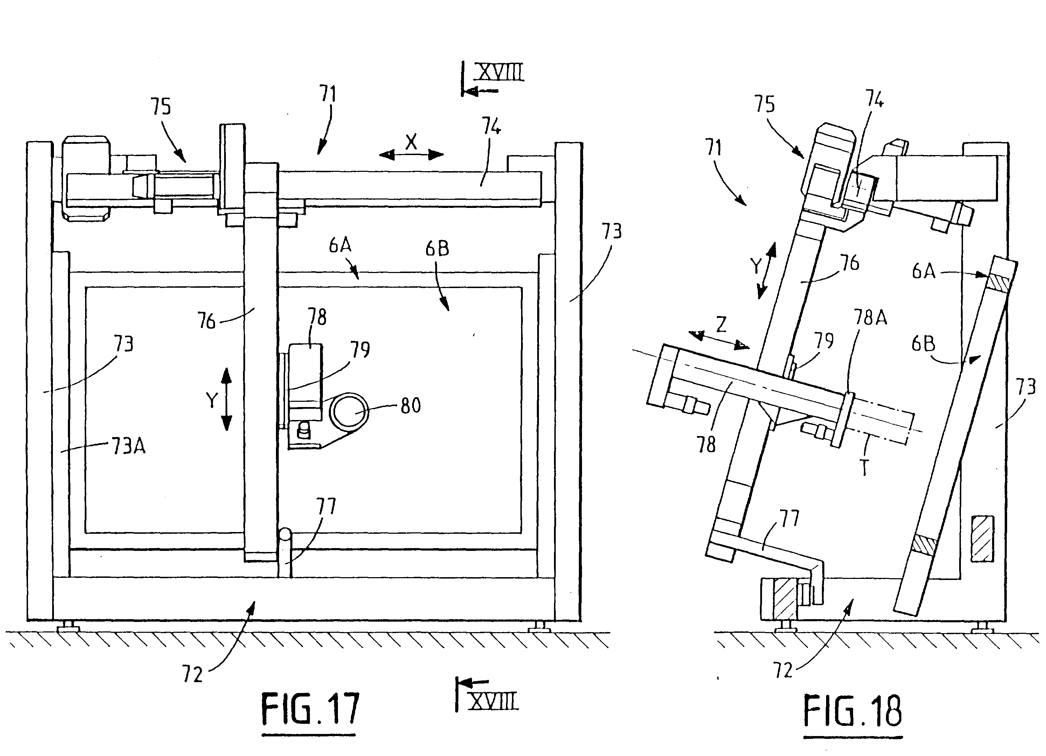

Sur la figure 15, il est montré une tête de piquage comportant l'ensemble pied-de-biche 43, guide-fil 50 et aiguille 33 (figure 13). Sur une bride circulaire 53 qui peut être fixée sur le porte-outil de la machine 10 (ou celui de la machine 71 décrite ci-après en regard des figures 17 et 18), est vissé un vérin pneumatique 54 qui actionne une platine 55. Par ailleurs, la bride 53 porte une douille à billes 56 de guidage d'un axe 57. La platine 55 quant à elle porte un support 58 de l'aiguille 33, un vérin auxiliaire 59, et une seconde douille à billes 60 coulissant sur l'axe 57. Le vérin auxiliaire 59 porte le pied-de-biche 43 et un pince-fil 61 (analogue au guide-fil 50) pour le fil F, tandis que l'axe de guidage 57 porte le guide-fil ou pince-fil 50, en étant sollicité par le ressort de traction 62 et retenu par une butée 63. L'aiguille 33 est maintenue sur le support 58 à l'aide d'une pince conique 64 serrée par un écrou 65.

En outre, pour la dépose des tronçons de fil des nappes superposées, on peut utiliser le dispositif décrit dans le brevet EP-B-0 284 497. Cependant, conformément à l'invention, il est avantageux d'utiliser l'outil 66 montré sur la figure 16, dénommé ci-après tête à tramer, c'est-à-dire à déposer les fils constituant les nappes superposées de l'armature. La tête à tramer 66 est montée sur un support 67, que l'on peut rendre solidaire du porte-outil de la machine, et est constituée d'un tube rigide 68 prolongé par un tube souple 69, pouvant être réalisé sous forme d'un ressort à spires jointives, terminé par un embout 70, le fil F traversant lesdits tubes et ledit embout.

Les figures 17 et 18 illustrent un autre exemple de machine pour la mise en oeuvre du procédé selon l'invention. Cette machine 71 permet de travailler dans un plan de travail incliné, pour améliorer l'ergonomie et diminuer la surface d'atelier occupée, pour la réalisation d'armatures en forme de plaque. Dans ce cas, comme on le voit sur les figures 17 et 18, le cadre 6A,6B pour l'armature est fortement incliné par rapport à l'horizontale, par exemple d'un angle d'environ 75°, comme montré. L'encombrement de la machine est alors essentiellement "vertical".

La machine 71 comprend un bâti pourvu d'un piétement 72 et de montants verticaux 73, réunis à leurs extrémités supérieures par une traverse horizontale 74, et sur lesquels peut être fixé le cadre 6A,6B, en 73A. La traverse 74 matérialise un premier axe linéaire X, sur lequel peut coulisser un chariot 75 portant une barre 76. Cette dernière est perpendiculaire à la traverse 74 et inclinée de façon à s'étendre parallèlement au plan du cadre 6A,6B. Cette barre 76 est solidaire, à son extrémité opposée à la traverse 74, du piétement 72 par l'intermédiaire d'une barre de liaison coudée 77, et matérialise un deuxième axe linéaire Y, orthogonal à X. Par ailleurs, la barre 76 porte, à son tour, un bras 78 pouvant coulisser le long de celle-ci grâce à un chariot 79 et matérialisant un troisième axe linéaire Z perpendiculaire au plan du cadre 6A,6B. A son extrémité 78A proche du cadre 6A,6B, le bras 78 porte un axe rotatif 80 servant de porte-outil pour un outil T (représenté schématiquement en traits mixtes sur la figure 18), qui peut être une tête de tramage (comme l'outil 66 de la figure 16) ou une tête de piquage (comme la tête, comportant l'ensemble aiguille 33, pied-de-biche 43 et guide-fil 50, de la figure 15).

Comme déjà indiqué, le tramage à 0° et 90° (c'est-à-dire la dépose de tronçons de fil rectilignes dans les directions X et Y) est réalisé par des allers et retours du fil entre les picots implantés dans le cadre de support.

On notera que le pas (distance entre deux tronçons de fil rectilignes parallèles adjacents) des tronçons de fil de la nappe déposée correspond à la moitié du pas (écartement entre les picots) des picots disposés sur le cadre. Cela permet d'utiliser un outil de tramage de taille relativement importante et des picots rigides sur le cadre.

Lors de son passage autour d'un picot, le tube souple 69 de la tête à tramer 66 se redresse car le fil se détend. Cela permet de descendre le point de dépose du fil sur le picot.

En revanche, lors de l'avance de tramage entre les picots, le fil se tend et le tube souple fléchit. Cela permet d'obtenir un rayon de courbure important, ce qui est favorable à la tenue du fil, et de remonter le point de sortie du fil pour éviter d'accrocher les nappes déjà déposées.

Comme déjà indiqué, le tramage à 45° (ou à 135°) est obtenu en ne prenant en compte que trois picots sur quatre, pour un agencement des picots comme montré sur la figure 6.

Par ailleurs, il est possible de disposer les fils d'une manière autre que dans les directions indiquées. Par exemple, des fils à 10° seront placés au niveau du cadre comme des fils à 0°, mais avec un décalage correspondant des picots entre les deux côtés opposés du cadre afin d'obtenir cet angle.

A cet égard, on notera encore que les déplacements des outils étant gérés par un dispositif à commande numérique comportant un ordinateur dans lequel est montée une carte spéciale de gestion d'axes, il suffit d'y programmer les trajectoires voulues. Cela est notamment vrai lorsqu'il existe des picots supplémentaires de guidage et d'accrochage permettant de renforcer l'armature selon un motif arbitrairement choisi.

De plus, comme sécurité, des détecteurs de présence de bourre et de surtension (non représentés) peuvent être disposés sur chaque fil de tramage.

Pour la solidarisation entre elles des nappes superposées 2,3, on effectue, comme montré sur les figures 19A à 19D, un piquage dans la direction Z. Pour ce faire, pendant l'introduction de l'aiguille 33 dans les nappes 2,3, le fil F est entraîné par ladite aiguille à travers les nappes 2,3 (figure 19B), le pince-fil (non représenté sur les figures 19A à 19D) étant serré et la course de l'aiguille étant réglée de façon qu'elle pénètre dans le support 6. Pendant le retrait de l'aiguille 33 hors des nappes 2,3, le pince-fil est desserré et l'aiguille se retire en libérant le fil F au fur et à mesure à travers les nappes 2,3, en formant ainsi une boucle non fermée 8 qui est uniquement retenue par la mousse dont est formé le support et par le frottement du fil dans les nappes 2 et 3 (figures 19C, 19D).

Ainsi, c'est grâce à la pression élastique de la mousse se refermant sur la boucle après le retrait de l'aiguille d'une part, et au frottement et au serrage dans les nappes 2,3 d'autre part, que, lors du retrait de l'aiguille, le fil F, qui défile librement dans l'aiguille pendant ce retrait, est retenu pour former la boucle ouverte 8.

Après l'avoir ressortie des nappes 2 et 3, on fait remonter l'aiguille au-dessus de la surface desdites nappes, d'une distance égale à l'épaisseur à piquer augmentée du pas de piquage 7, c'est-à-dire l'écartement désiré entre deux piqûres (figure 19A).

On actionne alors le pince-fil pour bloquer le fil dans l'aiguille, on déplace la tête de piquage d'un pas, et on actionne de nouveau le dispositif pour recommencer le cycle afin de former en continu une grande quantité de boucles avec le même fil F, c'est-à-dire pour former les points de piqûre 8 d'une rangée. La rangée de boucles suivantes est effectuée après déplacement relatif de l'aiguille 33 par rapport à l'armature 1.

Plus précisément, comme on le voit sur les figures 19A-19D, en partant de la position initiale (et finale) montrée sur la figure 19A, dans laquelle le pied-de-biche 43 vient de remonter, on fait descendre la tête de piquage (de la façon décrite ci-après en regard de la figure 15) pour former une boucle de fil 8 lors de la descente de l'aiguille 33 à travers les nappes superposées 2,3. On remarquera qu'à ce moment, le guide-fil 50 est arrêté au contact de la nappe la plus supérieure (figure 19B). L'aiguille 33 étant dans sa position la plus inférieure (figure 19C), le pied-de-biche 43 vient appuyer, à son tour, sur la nappe la plus supérieure des nappes superposées 2,3 en emprisonnant la boucle 8. C'est cette action combinée de pressage du guide-fil 50 et surtout du pied-de-biche 43 qui assure le tassement des nappes superposées présentant alors une densité des tronçons de fil qui les constituent suffisante pour retenir par friction le fil de solidarisation des nappes. Le pied-de-biche 43 restant au contact de la nappe la plus supérieure, lors de la remontée de l'aiguille 33 (figure 19D), le fil glisse dans le chas de l'aiguille en restant en place.

Considérant maintenant également la figure 15, la descente de l'aiguille 33 est assurée par le vérin 54 qui descend en entraînant la platine 55 et donc toutes les pièces fixées sur celle-ci. Au début de cette descente, c'est-à-dire avant la pénétration de l'aiguille 33 dans les nappes superposées 2,3, le fil F est maintenu par le pince-fil 61 et le guide-fil 50, jouant également le rôle de pince-fil, et forme une boucle (figure 19A).

Lorsque l'aiguille 33 pénètre dans les nappes 2,3, le guide-fil 50 vient au contact de ces nappes, en immobilisant l'axe 57, et le fil F glisse dans le guide-fil 50, tandis que la boucle de fil précédemment formée est enfoncée dans les nappes (figure 19B). L'aiguille 33 étant arrivée dans sa position la plus inférieure (figure 19C), le pied-de-biche 43 est amené au contact de la nappe la plus supérieure par commande du vérin 59 pour le faire descendre, ce qui assure le tassement des nappes superposées, puis on commande la remontée du vérin 54 et, ainsi, de l'aiguille 33 (figure 19D).

Lorsque l'aiguille 33 remonte à travers les nappes 2,3, le pied-de-biche 43 reste appuyé contre ces dernières sous la poussée du vérin associé 59. Le fil est coincé alors par les pince-fils. Lorsque la butée 63 revient au contact de la douille 60, le guide-fil 50 remonte avec l'aiguille 33 et le fil coulisse dans celui-ci. La fin de la remontée de l'aiguille 33 commande la remontée du pied-de-biche 43. Le fil est coincé par le guide-fil 50 et coulisse dans le pince-fil supérieur 61.

On notera que la longueur de fil consommée au cours de chaque piquage peut être mesurée par la rotation d'un codeur (non représenté) et comparée à une valeur programmée.

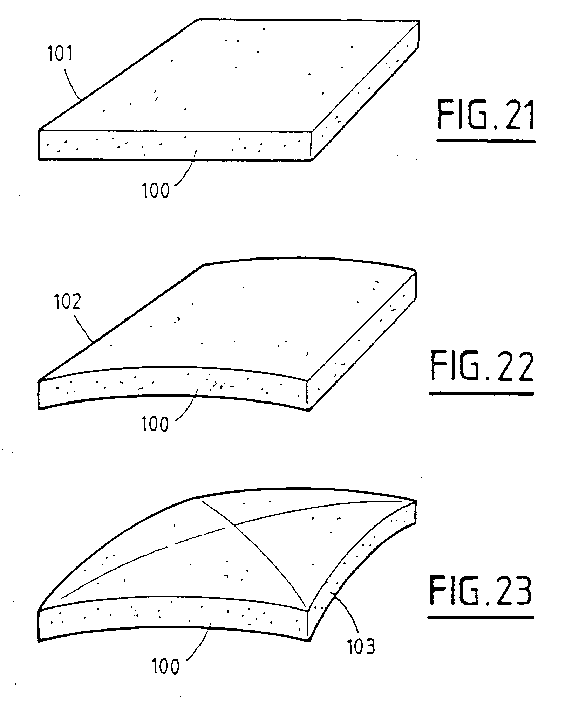

Comme le montre la figure 20, on peut réaliser des blocs épais constitués par la superposition d'armatures 1, formant des plaques élémentaires planes, raccordées par piquage dans la direction Z, soit deux à deux, soit trois à trois selon le cas. On notera que la figure 20 ne montre pas le produit final obtenu, mais illustre, schématiquement, la "superposition" d'opérations de piquage successives concernant une plaque, puis une deuxième plaque et, enfin, la troisième plaque. Dans chaque cas, le piquage peut s'effectuer comme précédemment décrit.

Les figures 21 à 23 montrent, à titre d'exemples, différentes pièces de matière composite, comportant une armature réalisée conformément à l'invention noyée dans une matrice durcie 100. Ainsi, la figure 21 montre un panneau plan 101, la figure 22 un panneau convexe 102, la figure 23 un panneau bi-convexe 103.

On notera que, préalablement à l'imprégnation par la matrice, l'armature en forme de plaque réalisée conformément à l'invention peut être extraite en découpant l'extérieur du cadre et en le désolidarisant (par arrachement) de la mousse. La périphérie est perdue et on ne récupère que la partie centrale correspondant à une plaque élémentaire.

Ainsi, l'invention permet de réaliser de manière simple et industrielle de grandes pièces de matière composite, dans lesquelles peuvent être découpées des pièces élémentaires présentant éventuellement des renforts internes pour absorber les efforts spécifiques, éventuellement subis par la pièce en service. On peut également réaliser des ensembles complexes et/ou épais par assemblage de plaques individuelles raccordées par piquage.

## Revendications

1. Procédé pour la réalisation d'une armature pour une pièce de matière composite, formée de ladite armature noyée dans une matrice durcie, ladite armature comprenant des nappes superposées de fil, procédé selon lequel :
- on réalise lesdites nappes superposées en disposant sur un support (6A, 6B), pour chaque nappe, des tronçons de fil rectilignes au moins sensiblement parallèlement les uns par rapport aux autres, les tronçons de fil rectilignes de chaque nappe s'étendant suivant une direction, soit parallèle, soit croisée par rapport à la direction des tronçons de fil rectilignes d'une autre nappe quelconque de l'armature, et
- on solidarise entre elles l'ensemble des nappes superposées par piquage sans nouage et tassage, à l'aide d'un fil traversant lesdites nappes, ledit fil de solidarisation passant et repassant à travers lesdites nappes,
caractérisé en ce que, ladite armature présentant la forme d'une plaque :
- on forme chacune desdites nappes (2, 3) superposées sur ledit support (6A, 6B), au moyen de tronçons de fil rectilignes (4, 5) tendus à leurs extrémités (4a, 4b ; 5a, 5b) entre deux points de fixation ;
- on tasse par pression mécanique lesdites nappes (2, 3) superposées, pour que la densité des tronçons de fil (4, 5) constituant lesdites nappes (2, 3) superposées soit telle que lesdits tronçons de fil occupent au moins 40% du volume de ladite pièce de matière composite ; et
- pour conserver l'état de tassement ainsi obtenu desdites nappes (2, 3), on utilise une densité de fil de solidarisation (F) telle que ledit fil de solidarisation (F) occupe de 1 à 10% du volume de ladite pièce de matière composite.

2. Procédé selon la revendication 1,
caractérisé en ce que lesdits tronçons de fil (4, 5) occupent entre 40 et 60% du volume de la pièce de matière composite.

3. Procédé selon l'une des revendication 1 ou 2,
caractérisé en ce que chaque point de fixation en position est matérialisé par un picot (9), implanté dans la zone marginale (6A) dudit support, autour duquel picot (9) passe la jonction entre deux tronçons de fil rectilignes (4, 5) de même direction et de sens opposés.

4. Procédé selon l'une quelconque des revendications 1 à 3,
caractérisé en ce que ledit support est constitué d'un cadre quadrangulaire (6A), entourant une masse de matière souple (6B), telle qu'une mousse de matière synthétique, et en ce que lesdits picots d'accrochage (9) sont implantés sur le pourtour dudit cadre (6A).

5. Procédé selon la revendication 4,
caractérisé en ce que lesdits picots d'accrochage (9) sont implantés sur le pourtour dudit cadre (6A), en étant régulièrement répartis selon un motif de ligne brisée (L) sur chaque face du cadre.

6. Procédé selon la revendication 4,
caractérisé en ce que des picots de guidage (9A) sont implantés intérieurement aux picots d'accrochage (9), en formant plusieurs rangées de picots agencés en quinconce sur chaque face du cadre (6A).

7. Procédé selon l'une quelconque des revendications 4 à 6,
caractérisé en ce que lesdits picots d'accrochage (9) sont implantés en étant inclinés vers l'extérieur du cadre (6A).

8. Procédé selon l'une quelconque des revendications 4 à 7,
caractérisé en ce que des picots de guidage (9A) et d'accrochage (9) supplémentaires sont implantés dans la masse de matière souple (6B) entourée par le cadre (6A).

9. Machine pour la mise en oeuvre du procédé selon l'une quelconque des revendications 1 à 8, du type comportant un bâti pourvu d'un piétement et de montants pour le montage d'une barre transversale sur laquelle est monté un chariot, déplaçable suivant une première direction X, muni d'un premier bras s'étendant suivant une deuxième direction Y orthogonale à la direction X et portant un second bras pouvant coulisser transversalement par rapport au plan défini par ladite barre et ledit premier bras suivant une troisième direction Z, des moyens moteurs pour entraîner ledit chariot et lesdits premier et second bras, et des outils de dépose et piquage de fil susceptibles d'être montés, de façon amovible, sur un support à une extrémité dudit second bras et pourvus d'un pied de biche de tassement,
caractérisée en ce que l'outil de dépose de fil (66) présente un tube rigide (68) prolongé par un tube souple (69), le fil (F) traversant lesdits tubes.

10. Machine selon la revendication 9,
caractérisée en ce que ledit outil de piquage (P) présente un support rotatif (41) à l'extrémité inférieure duquel est montée une aiguille (33), associée au pied-de-biche (43).

11. Machine selon la revendication 10,
caractérisée en ce que ladite aiguille (33) est creuse et en ce que ledit support rotatif (41) est traversé par un canal de guidage de fil (41A) raccordé à ladite aiguille.

12. Machine selon la revendication 10,
caractérisée en ce que ladite aiguille (33) présente un chas traversant oblique (48) et est associée à un guide-fil (50) comportant un corps traversé obliquement par un canal de passage de fil (51), dont l'extrémité inférieure (51A) est évasée.

13. Machine selon la revendication 12,
caractérisée en ce que l'outil de piquage comporte un mécanisme d'actionnement de l'ensemble pied-de-biche (43), guide-fil (50) et aiguille (33), constitué d'un premier vérin (54) actionnant une platine (55) sur laquelle est monté ledit ensemble, un axe (57) portant le guide-fil (50) et un second vérin (59) actionnant le pied-de-biche (43).

14. Machine selon la revendication 13,
caractérisée en ce que ledit guide-fil (50) est apte à tasser lesdites nappes superposées.

15. Machine selon la revendication 13,
caractérisée en ce que ladite aiguille (33) est maintenue sur ladite platine (55), par l'intermédiaire d'un support (58), à l'aide d'une pince conique (64) serrée par un écrou (65).

16. Machine selon l'une des revendications 13 à 15,
caractérisée en ce que l'axe (57) portant le guide-fil (50) est sollicité par un ressort de traction (62) et retenu par une butée (63).

## Patentansprüche

1. Verfahren zur Herstellung einer Verstärkung für ein Teil aus Verbundmaterial, das aus der in einer ausgehärteten Matrix eingelagerten Verstärkung aus übereinanderliegenden Fadengelegen besteht, nach dem:
- die übereinanderliegenden Gelege hergestellt werden, indem für jedes Gelege auf einer Unterlage (6A, 6B) geradlinige Fadenabschnitte zumindest annähernd parallel zueinander angeordnet werden, die geradlinigen Fadenabschnitte jedes Geleges nach einer Richtung entweder parallel oder quer zur Richtung der geradlinigen Fadenabschnitte eines anderen Geleges der Verstärkung verlaufen, und
- samtliche übereinanderliegenden Gelege ohne Verschlingung und Verdichtung mit Hilfe eines Fadens durch die Gelege vernäht werden, wobei der Verbindungsfaden hin und her durch die Gelege verläuft,
dadurch gekennzeichnet, daß bei einer plattenförmigen Verstärkung:
- jedes der übereinanderliegenden Gelege (2, 3) auf der Unterlage (6A, 6B) mit Hilfe geradliniger Fadenabschnitte (4, 5) hergestellt wird, die an ihren Enden (4a, 4b; 5a, 5b) zwischen zwei Fixierungspunkten gespannt werden;
- die übereinanderliegenden Gelege (2, 3) durch mechanischen Druck so verdichtet werden, daß die Fadenabschnitte (4, 5) der übereinanderliegenden Gelege (2, 3) aufgrund der Dichte mindestens 40 % des Volumens des Teils aus Verbundmaterial einnehmen, und
- zur Erhaltung des so erzielten Verdichtungszustandes der Gelege (2, 3) eine solche Dichte des Verbindungsfadens (F) gewählt wird, daß der Verbindungsfaden (F) 1 bis 10 % des Volumens des Teils aus Verbundmaterial einnimmt.

2. Verfahren nach Anspruch 1,
dadurch gekennzeichnet, daß die Fadenabschnitte (4, 5) zwischen 40 und 60 % des Volumens des Teils aus Verbundmaterial einnehmen.

3. Verfahren nach einem der Ansprüche 1 oder 2,
dadurch gekennzeichnet, daß jeder Lagefixierungspunkt aus einem Stift (9) besteht, der in der Randzone (6A) der Unterlage angebracht ist, wobei um den Stift (9) herum die Verbindung zwischen zwei geradlinigen, gleichgerichteten und entgegengesetzen Fadenabschnitten (4,5) verläuft.

4. Verfahren nach einem der Ansprüche 1 bis 3,
dadurch gekennzeichnet, daß die Unterlage aus einem viereckigen Rahmen (6A) um ein flexibles Material (6B) wie synthetischem Schaumstoff herum besteht, und dadurch, daß die Befestigungsstifte (9) am Umfang des Rahmens (6A) angeordnet sind.

5. Verfahren nach Anspruch 4,
dadurch gekennzeichnet, daß die Befestigungsstifte (9) am Umfang des Rahmens (6A) an jeder Rahmenseite nach einer gebrochenen Linie (L) regelmäßig verteilt angebracht sind.

6. Verfahren nach Anspruch 4,
dadurch gekennzeichnet, daß innerhalb der Befestigungsstifte (9) Führungsstifte (9A) angebracht sind, die auf jeder Seite des Rahmens (6A) in mehreren Zickzackreihen angeordnet sind.

7. Verfahren nach einem der Ansprüche 4 bis 6,
dadurch gekennzeichnet, daß die Befestigungsstifte (9) am Rahmen (6A) nach außen geneigt sind.

8. Verfahren nach einem der Ansprüche 4 bis 7,
dadurch gekennzeichnet, daß in dem vom Rahmen (6A) umgebenenen flexiblen Material (6B) zusätzliche Führungs- (9A) und Befestigungsstifte (9) angebracht sind.

9. Maschine für die Anwendung des Verfahrens nach einem der Ansprüche 1 bis 8, mit einem Untersatz mit Gestell und Ständern für die Montage einer Querstange, an der sich ein in einer ersten Richtung X beweglicher Schlitten mit einem ersten Arm, der nach einer zweiten Richtung Y rechtwinklig zur Richtung X verläuft, und ein zweiter Arm befindet, der sich quer zu der von der Stange und dem ersten Arm gebildeten Ebene in einer dritten Richtung Z bewegen kann, Antriebsmitteln für den Schlitten und den ersten und zweiten Arm und Ablege- und Nähwerkzeugen, die lösbar an einer Halterung an einem Ende des zweiten Arms angebracht werden können und mit einem Nähfuß zur Verdichtung versehen sind,
dadurch gekennzeichnet, daß das Werkzeug zum Ablegen des Fadens (66) ein starres Rohr (68) mit einem anschließenden flexiblen Rohr (69) hat und der Faden (F) durch die Rohre verläuft.

10. Maschine nach Anspruch 9,
dadurch gekennzeichnet, daß das Nahwerkzeug (P) eine drehbare Halterung (41) hat, an deren unterem Ende eine Nadel (33) montiert ist, die mit dem Nähfuß (43) verbunden ist.

11. Maschine nach Anspruch 10,
dadurch gekennzeichnet, daß die Nadel (33) hohl ist und daß durch die drehbare Halterung (41) ein Fadenführungskanal (41A) verläufert, der mit der Nadel verbunden ist.

12. Maschine nach Anspruch 10,
dadurch gekennzeichnet, daß die Nadel (33) ein durchgehendes schräges Nadelöhr (48) hat und mit einem Fadenführer (50) mit Gehäuse verbunden ist, durch das schräg ein Fadenführungskanal (51) verläuft, dessen unteres Ende (51A) aufgeweitet ist.

13. Maschine nach Anspruch 12,
dadurch gekennzeichnet, daß das Nähwerkzeug einen Mechanismus zur Betätigung der Baugruppe Nähfuß (43), Fadenführer (50) und Nadel (33) hat, der aus einem ersten Zylinder (54) zur Betätigung einer Platine (55), an der die Baugruppe angebracht ist, einer Achse (57) mit dem Fadenführer (50) und einem zweiten Zylinder (59) zur Betätigung des Nähfußes (43) besteht.

14. Maschine nach Anspruch 13,
dadurch gekennzeichnet, daß der Fadenführer (50) in der Lage ist, die übereinanderliegenden Gelege zu verdichten.

15. Maschine nach Anspruch 13,
dadurch gekennzeichnet, daß die Nadel (33) an der Platine (55) durch eine Halterung (58) mit Hilfe einer konischen Klemme (64) gehalten wird, die durch eine Mutter (65) blockiert wird.

16. Maschine nach einem der Ansprüche 13 bis 15,
dadurch gekennzeichnet, daß die Achse (57) mit dem Fadenführer (50) durch eine Zugfeder (62) beaufschlagt und durch einen Anschlag (63) begrenzt wird.

## Claims

1. Method for producing a reinforcement for a composite component formed by the said reinforcement embedded in a cured matrix, the said reinforcement including superposed plies of thread, according to which method:
- the said superposed plies are produced by arranging on a support (6A, 6B), for each ply, straight portions of thread at least substantially in a parallel fashion with respect to each other, the straight portions of thread of each ply extending in a direction which is either parallel or crossed with respect to the direction of the straight portions of thread of any other ply in the reinforcement, and
- all the superposed plies are consolidated by stitching, without knotting or compacting, by using a thread passing through the said plies, the said consolidating thread passing and repassing through the said plies,
characterized in that, the said reinforcement being in the form of a sheet:
- each of the said superposed plies (2, 3) is formed on the said support (6A, 6B) by means of straight portions of thread (4, 5) pulled tight at their ends (4a, 4b; 5a, 5b) between two fixing points;
- the said superposed plies (2, 3) are compacted by mechanical pressure so that the density of the portions of thread (4, 5) constituting the said superposed plies (2, 3) is such that the said portions of thread occupy at least 40% of the volume of the said composite component; and
- in order to preserve the state of compaction of the said plies (2, 3) which is thus obtained, use is made of a density of consolidating thread (F) such that the said consolidating thread (F) occupies from 1 to 10% of the volume of the said composite component.

2. Method according to Claim 1, characterized in that the said portions of thread (4, 5) occupy between 40 and 60% of the volume of the composite component.

3. Method according to either of Claims 1 and 2, characterized in that each positional fixing point is manifested by a peg (9) implanted in the marginal zone (6A) of the said support, around which peg (9) passes the junction between two straight portions of thread (4, 5) of the same direction but of opposite senses.

4. Method according to any one of Claims 1 to 3, characterized in that the said support consists of a quadrilateral frame (6A) surrounding a mass of soft material (6B), such as a foam of synthetic material, and in that the said hooking-on pegs (9) are implanted on the perimeter of the said frame (6A).

5. Method according to Claim 4, characterized in that the said hooking-on pegs (9) are implanted on the perimeter of the said frame (6A), these being uniformly distributed in a pattern of a broken line (L) on each face of the frame.

6. Method according to Claim 4, characterized in that guiding pegs (9A) are implanted inside the hooking-on pegs (9), forming several rows of pegs in a staggered configuration on each face of the frame (6A).

7. Method according to any one of Claims 4 to 6, characterized in that the said hooking-on pegs (9) are implanted so as to incline outwardly from the frame (6A).

8. Method according to any one of Claims 4 to 7, characterized in that additional guiding (9A) and hooking-on (9) pegs are implanted in the mass of soft material (6B) surrounded by the frame (6A).

9. Machine for implementing the method according to any one of Claims 1 to 8, of the type comprising a stand provided with a subframe and with uprights for mounting a transverse bar on which is mounted a carriage, which can move in a first, X, direction, equipped with a first arm extending in a second, Y, direction orthogonal to the X direction and carrying a second arm able to slide transversely with respect to the plane defined by the said bar and the said first arm in a third, Z, direction, motor means for driving the said carriage and the said first and second arms, and thread laying-down and stitching tools capable of being removably mounted on a support at one end of the said second arm and provided with a compaction presser-foot, characterized in that the thread laying-down tool (66) has a rigid tube (68) extended by a flexible tube (69), the thread (F) passing through the said tubes.

10. Machine according to Claim 9, characterized in that the said stitching tool (P) has a rotary support (41) at the lower end of which a needle (33), associated with the presser-foot (43), is mounted.

11. Machine according to Claim 10, characterized in that the said needle (33) is hollow and in that a thread-guiding channel (41A) connected to the said needle passes through the said rotary support (41).

12. Machine according to Claim 10, characterized in that the said needle (33) has an oblique through-eye (48) and is associated with a thread-guide (50) comprising a body through which passes obliquely a channel (51) for passage of the thread, the lower end (51A) of the said channel being flared.

13. Machine according to Claim 12, characterized in that the stitching tool comprises a mechanism for actuating the presser-foot (43)/thread-guide (50)/needle (33) assembly, consisting of a first cylinder actuator (54) actuating a plate (55) on which the said assembly is mounted, a spindle (57) carrying the thread-guide (50) and a second cylinder actuator (59) actuating the presser-foot (43).

14. Machine according to Claim 13, characterized in that the said thread-guide (50) is capable of compacting the said superposed plies.

15. Machine according to Claim 13, characterized in that the said needle (33) is held in position on the said plate (55) by means of a support (58), using a conical clamp (64) tightened by a nut (65).

16. Machine according to one of Claims 13 to 15, characterized in that the spindle (57) carrying the thread-guide (50) is stressed by a tensioning spring (62) and retained by a stop (63).
